(19) **Europäisches Patentamt**
**European Patent Office**
**Office européen des brevets**

(11) **EP 3 242 412 B1**

(12) **FASCICULE DE BREVET EUROPEEN**

(45) Date de publication et mention de la délivrance du brevet:
**17.10.2018 Bulletin 2018/42**

(51) Int Cl.:
***H04B 3/54*** *(2006.01)*     ***H04L 7/08*** *(2006.01)*

(21) Numéro de dépôt: **17168270.1**

(22) Date de dépôt: **26.04.2017**

(54) **PROCÉDÉ DE SYNCHRONISATION D'UN DISPOSITIF ÉLECTRONIQUE SUR UN SIGNAL ALTERNATIF PÉRIODIQUE ET PROCÉDÉ DE TÉLÉCOMMUNICATION CORRESPONDANT**

VERFAHREN ZUR SYNCHRONISIERUNG EINER ELEKTRONISCHEN VORRICHTUNG AUF EINEM PERIODISCHEN ALTERNATIVEN SIGNAL, UND ENTSPRECHENDES TELEKOMMUNIKATIONSVERFAHREN

METHOD FOR SYNCHRONISING AN ELECTRONIC DEVICE TO A PERIODIC ALTERNATING SIGNAL AND CORRESPONDING TELECOMMUNICATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2016 FR 1654018**

(43) Date de publication de la demande:
**08.11.2017 Bulletin 2017/45**

(73) Titulaire: **Sagemcom Energy & Telecom SAS 92500 Rueil-Malmaison (FR)**

(72) Inventeur: **TEBOULLE, Henri 92500 RUEIL MALMAISON (FR)**

(74) Mandataire: **Lavialle, Bruno François Stéphane et al Cabinet Boettcher 16, rue Médéric 75017 Paris (FR)**

(56) Documents cités:
**WO-A1-2007/043705    GB-A- 2 156 190**

**Description**

La présente invention concerne la synchronisation d'un dispositif électronique sur un signal alternatif périodique. Une telle synchronisation peut par exemple être utilisée pour la transmission de données ou la production périodique d'un signal d'horloge.

ETAT DE LA TECHNIQUE

La communication par courants porteurs en ligne (dite aussi CPL) consiste à transmettre des données en utilisant comme porteuse le courant alternatif circulant dans un réseau électrique tel que celui d'une installation électrique privée ou publique, ou formant une portion du réseau de distribution. Les données sont codées pour former des trames sous forme de signaux de données superposés au signal de puissance. Les signaux de données ont une fréquence supérieure à celle du signal de puissance mais ont une énergie bien inférieure. Il existe plusieurs protocoles réglementant la transmission des signaux de données.

La transmission des signaux de données suppose de synchroniser entre eux les dispositifs destinés à échanger des données et de synchroniser les signaux de données par rapport au signal de puissance. Ceci est réalisé en prenant comme référence l'instant de passage par zéro de chaque front montant de la tension du réseau (ces instants de passage sont couramment dénommés « zéro crossing », et on pourrait tout aussi bien considérer les fronts descendants). L'émission des trames débute après un temps prédéterminé suivant l'instant de passage par zéro. On comprend que la fiabilité de la transmission dépend de la précision avec laquelle a été déterminé l'instant de passage par zéro. La précision attendue est de quelques microsecondes.

Comme le signal de tension du réseau de distribution a une forme de sinusoïde, la portion du signal de tension voisine de zéro est en théorie quasiment une droite. Il est connu, notamment dans les documents GB 2 156 190 et WO 2007/043705, de déterminer les instants de passage par zéro en échantillonnant le signal de tension et en effectuant une interpolation linéaire au voisinage de zéro d'un échantillon à l'autre. Toutefois, en pratique, le signal de tension est perturbé par des variations de fréquence du réseau, la présence d'harmoniques et du bruit, en particulier du bruit de gigue, ce qui empêche de déterminer précisément les instants de passage par zéro du signal de tension par la méthode précitée compte tenu du fait que la fréquence d'échantillonnage (de quelques milliers de Hertz) ne peut être augmentée pour des raisons de coût des moyens de traitement.

OBJET DE L'INVENTION

Un but de l'invention est de pouvoir déterminer relativement précisément les instants de passage d'un signal alternatif périodique par une valeur prédéterminée.

BREF EXPOSE DE L'INVENTION

A cet effet, on prévoit, selon l'invention, un procédé de synchronisation d'un dispositif électronique sur des instants de passage à une valeur prédéterminée d'un signal alternatif périodique de fréquence prédéterminée, le procédé comprenant les étapes de :

- sur un intervalle de temps antérieur prédéterminé couvrant plusieurs périodes du signal et pour chaque période du signal, déterminer au moins un instant de passage, à la valeur prédéterminée, d'une amplitude du signal alternatif à partir de mesures de ladite amplitude,
- sur un intervalle de temps postérieur à l'intervalle de temps antérieur et couvrant au moins une période du signal, et pour chaque période du signal, déterminer l'instant de passage, à la valeur prédéterminée, de l'amplitude du signal alternatif à partir d'un instant de passage de référence, d'une durée estimée de la période du signal sur l'intervalle de temps postérieur et d'un nombre de périodes écoulées entre l'instant de passage de référence et l'instant de passage à déterminer, l'instant de passage de référence étant calculé à partir d'une moyenne d'instants de passage déterminés sur l'intervalle de temps antérieur et d'un nombre de périodes moyennes écoulées entre le dernier instant de passage de l'intervalle de temps antérieur et chacun desdits instants de passage comptabilisés dans la moyenne.

Le fait de réaliser une moyenne sur les instants de passage déterminés sur l'intervalle de temps antérieur permet de limiter l'influence du bruit sur l'estimation des instants de passage sur l'intervalle de temps postérieur. La combinaison du moyennage des durées des périodes sur l'intervalle de temps antérieur et du moyennage des instants de passage déterminés sur l'intervalle de temps antérieur compose un double filtrage non-linéaire imbriqué qui limite encore plus l'influence du bruit sur l'estimation des instants de passage.

Avantageusement, la durée estimée de la période sur l'intervalle de temps postérieur est égale à une moyenne des durées des périodes sur l'intervalle de temps antérieur.

Ceci améliore encore la faible sensibilité de la synchronisation au bruit du signal.

Selon un mode de mise en oeuvre particulier, la fréquence du signal est égale à quelques dizaines de hertz et l'intervalle de temps antérieur vaut quelques secondes. L'instant de passage de référence est obtenu par calcul de la moyenne de la somme de l'instant de passage déterminé de la dernière période de chaque seconde sur l'intervalle de temps antérieur et d'une durée égale au produit de la période moyenne sur l'intervalle de temps antérieur et d'un nombre de périodes séparant l'instant de passage déterminé de la dernière période de ladite seconde et le dernier instant de passage de l'intervalle de temps antérieur.

L'invention a également pour objet un procédé de transmission de données par courant porteur en ligne entre des dispositifs électroniques reliés à un réseau électrique, le procédé de transmission comprenant une phase de synchronisation des dispositifs électroniques mettant en oeuvre le procédé de synchronisation précité à partir d'un signal de tension du réseau électrique.

L'invention a également pour objet :

- un programme d'ordinateur comprenant des instructions pour mettre en oeuvre, par un dispositif électronique de type adaptateur CPL, le procédé de synchronisation,
- un programme d'ordinateur comprenant des instructions pour mettre en oeuvre, par au moins deux dispositifs électroniques de type adaptateur CPL reliés à un réseau électrique, le procédé de transmission de données,
- des moyens de stockage qui contiennent de tels programmes,
- un dispositif électronique comprenant une unité de commande reliée à un organe d'alimentation et à une interface CPL pour mettre en oeuvre le procédé de synchronisation,
- un système de transmission de données comprenant de tels dispositifs électroniques reliés à un réseau électrique pour mettre en oeuvre le procédé de transmission de données.

D'autres caractéristiques et avantages de l'invention ressortiront à la lecture de la description qui suit de modes de réalisation particuliers non limitatifs de l'invention.

BREVE DESCRIPTION DES FIGURES

Il sera fait référence aux dessins annexés, parmi lesquels :

- la figure 1 est une vue schématique d'une installation pour une mise en oeuvre de l'invention,
- la figure 2 est une courbe de la tension aux bornes du réseau électrique de l'installation en fonction du temps.

DESCRIPTION DETAILLEE DE L'INVENTION

En référence aux figures, l'invention est ici décrite en application à un procédé de transmission de données sur courant porteur en ligne (ou CPL). Cette transmission de données est réalisée sur un réseau électrique 100.

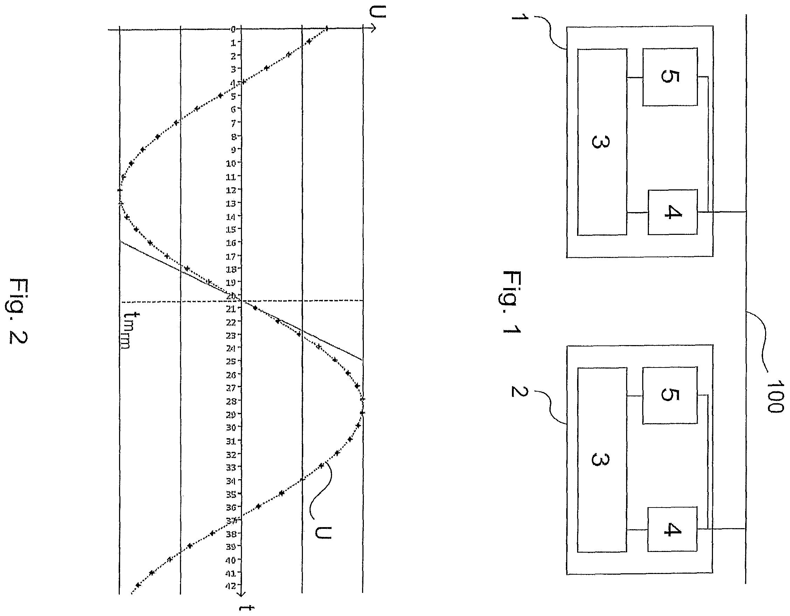

Le réseau électrique 100 transporte un courant alternatif périodique sous une tension de 230 V et à une fréquence de 50 Hz. Le signal de tension correspondant est une sinusoïde comme visible sur la figure 2.

Deux dispositifs électroniques 1, 2 sont ici raccordés au réseau électrique 100 qui assure ainsi la distribution de courant électriques auxdits dispositifs.

Communément appelés adaptateurs CPL, les dispositifs électroniques 1, 2 comprennent chacun, de façon connue en elle-même, une unité de commande 3 reliée à un organe d'alimentation 4 et à une interface CPL 5.

L'unité de commande 3 est ici une unité informatique comportant un microprocesseur agencé pour traiter des données.

L'organe d'alimentation 4 est agencé pour transformer le courant du réseau électrique 100 en un ou plusieurs courants adaptés à l'alimentation des composants du dispositif électronique. L'organe d'alimentation 4 comprend par exemple un transformateur et un circuit redresseur agencés pour transformer le courant du réseau électrique 100 en un courant continu à une tension de 5 V.

L'interface CPL 5 est agencée pour, d'une part, recevoir des données qui lui sont transmises par l'unité de commande 3, les coder dans des trames, et émettre les trames en superposant un signal de données au courant du réseau électrique 100 et, d'autre part, détecter des signaux de données superposés au courant du réseau électrique 100, en extraire les données et les transmettre à l'unité de commande 3. L'interface CPL 5 fonctionne ici selon le protocole G1 qui prévoit que les trames sont émises 120 $\mu$s, plus ou moins 20 $\mu$s, après un passage par zéro d'un front montant de la tension du réseau électrique 100. Ainsi, sur chaque période du signal de tension, il y a un seul instant de passage par zéro d'un front montant (dit également instant de zero-crossing). On voit, sur la figure 2, le signal de tension U, les instants d'échantillonnage auxquels la tension U va être mesurée et un instant de passage à zéro sur front montant.

La mise en oeuvre du protocole G1 suppose de synchroniser les dispositifs électroniques 1, 2 par rapport au signal de tension du réseau de distribution. Cette synchronisation se fait sur les instants de passage à zéro sur front montant. On comprend que sur chaque seconde, il y a 50 instants de passage à zéro sur front montant et que la synchronisation nécessite d'estimer les instants de passage à zéro sur la seconde à venir. Le protocole G1, pour émettre une trame, utilise toujours comme référence le passage par zéro d'un front montant. Dans le cas où la longueur d'une trame à transmettre dépasse 150ms, les trames sont fragmentées et sont émises alternativement sur front montant (premier fragment et fragments impairs), et sur front descendant (deuxième fragment et fragments pairs). Dans le cas d'une fragmentation, on peut alors également considérer les instants de passage à zéro sur les fronts montants et descendants de la seconde à venir, ce qui correspond à 100 instants de passage à zéro.

Selon l'invention, à une seconde n, on détermine les instants de passage à zéro de la seconde n+1 à partir, d'une part, d'une moyenne des instants de passage à zéro déterminés pendant les secondes n à n-9 et, d'autre part, d'une moyenne des durées des périodes pendant les secondes n à n-9.

A cette fin, le procédé de synchronisation selon l'invention comprend les étapes de :

- sur un intervalle de temps antérieur prédéterminé (secondes n-9 à n) couvrant plusieurs périodes du signal et pour chaque période du signal, détecter au moins un instant de passage à 0 de l'amplitude du signal de tension à partir de mesures de ladite amplitude,
- sur un intervalle de temps (seconde n+1) postérieur à l'intervalle de temps antérieur et couvrant au moins une période du signal, et pour chaque période du signal, déterminer l'instant de passage, à la valeur prédéterminée, de l'amplitude du signal alternatif à partir d'un instant de passage de référence, d'une durée estimée de la période du signal sur l'intervalle de temps postérieur et d'un nombre de périodes écoulées entre l'instant de passage de référence et l'instant de passage à déterminer, l'instant de passage de référence étant obtenu par calcul d'une moyenne d'instants de passage détectés sur l'intervalle de temps antérieur.

Dans le procédé de l'invention, on souhaite un historique des mesures réelles sur les 10 secondes de l'intervalle de temps antérieur. Cependant, il est impossible de déterminer par mesures directes les instants de passage à zéro sur la seconde en cours. On est tenu de les déterminer par estimation et projection à partir des mesures des secondes précédentes. L'intégration réalisée par le procédé de l'invention permet de s'affranchir des bruits de gigue par filtrage, comme décrit ci-après.

Sur la seconde n, les 50 instants de passage à zéro sur chaque front montant sont déterminés sur chaque période du fondamental via une interpolation linéaire du premier ordre selon une méthode classique et sont notés respectivement $t_{m_{k_n}}$ avec m pour mesurés et k pour désigner la période considérée (k varie donc de 0 à 49).

Sur la seconde n, la période d'échantillonnage répond à la formule suivante : $T_{ech_n} = T_n/N$. $T_n$ est la période de la fréquence fondamentale du signal de tension et est estimée sur la seconde n. N correspond au nombre d'échantillons par période $T_n$ (typiquement $N$ = 32).

L'interpolation linéaire est réalisée, de manière connue en elle-même, sur la base de deux échantillons consécutifs correspondant à un changement de signe (et donc à un passage par zéro) de l'amplitude du signal de tension (dans le cas d'un front montant, on passe du signe - au signe +). On obtient ainsi les instants estimés du passage par zéro dans le sens montant. Ces instants de passage à zéro sont notés $t_{e_{k_{n+1}}}$ (*e pour estimés et k varie de* 0 à49), sur la seconde n+1 et sont calculés à partir de la formule suivante :

$$t_{e_{k_{n+1}}} = t_{49_n} + (k+1).T'_n.$$

$t_{49_n}$ est l'instant de passage à zéro de référence et $T'_n$ est une période moyenne. Le mode de calcul de ces valeurs va maintenant être expliqué.

La valeur $T'_n$ est la moyenne des périodes du fondamental du signal de tension sur les dix secondes n à n-9 selon la formule suivante : $T'_n = \frac{1}{10}.\sum_{i=0}^{i=9} T_{n-i}$. Pour une mise en oeuvre optimisée, on peut calculer la valeur $T'_n$ en utilisant la moyenne des périodes du fondamental du signal de tension sur les dix secondes n-1 à n-10 suivant la formule : $T'_n = T'_{n-1} + \frac{1}{10}.[T_n - T_{n-10}]$.

La valeur $t_{49_n}$ est l'instant de passage à zéro de référence et correspond à la moyenne ajustée de l'instant de passage à zéro de la dernière période de chaque seconde sur les dix secondes n à n-9 (ces instants de passage à zéro sont notés $t_{m_{49_{n-i}}}$ avec m pour mesuré et i variant de 0 à 9). Plus précisément, cette valeur correspond à la moyenne, sur les dix secondes n à n-9, de l'instant de passage à zéro de la dernière période de chaque seconde n-i et de la durée séparant cet instant de passage à zéro du premier instant de passage à zéro de la seconde n+1. La valeur $t_{49_n}$ est calculée au moyen de la formule suivante :

$$t_{49_n} = \frac{1}{10} . \sum_{i=0}^{i=9} \left[ t_{m_{49_{n-i}}} + 50.i.T'_n \right] = \frac{1}{10} . \sum_{i=0}^{i=9} \left[ t_{m_{49_{n-i}}} \right] + 225.T'_n$$

En variante, on pourra utiliser la formule suivante pour une mise en oeuvre optimisée :

$$t_{49_n} = t_{49_{n-1}} + \frac{1}{10} . \left[ t_{m_{49_n}} - t_{m_{49_{n-10}}} \right] + 225. [T'_n - T'_{n-1}]$$

En variante encore, et en acceptant de faire un calcul plus complexe mais aussi plus précis, on peut calculer la valeur $t_{49_n}$ comme suit :

$$t_{49_n} = \frac{1}{10} . \left[ t_{m_{49_n}} + \sum_{i=1}^{i=9} \left[ t_{m_{49_{n-i}}} + 50. \sum_{l=1}^{l=i} T_{n-l} \right] \right]$$

Ceci permet de s'affranchir du bruit éventuel sur les instants de passage à zéro $t_{m_{49_{n-i}}}$.

On comprend que les intervalles de temps sont glissants pour pouvoir estimer les instants de passage à zéro des secondes suivantes. Par exemple, lorsque que l'on sera à la seconde n+1, les instants de passage à zéro pour la seconde n+2 seront estimés à partir de l'intervalle de temps antérieur sera celui des secondes n+1 à n-8.

Bien entendu, l'invention n'est pas limitée aux modes de réalisation décrits mais englobe toute variante entrant dans le champ de l'invention telle que définie par les revendications.

En particulier, les instants de passage $t_{e_{k_{n+1}}}$ peuvent être estimés en utilisant la période $T_n$ à la place de la période moyenne $T'_n$ pour obtenir la formule :

$$t_{e_{k_{n+1}}} = t_{49_n} + (k+1).T_n .$$

Les intervalles de temps antérieur et postérieur peuvent avoir des durées différentes de celles mentionnées.

Le réseau peut avoir une structure différente de celle décrite et comprendre par exemple des dispositifs électroniques en plus grand nombre et/ou de structures différentes.

Le procédé de synchronisation est utilisable pour d'autres fins que les télécommunications et par exemple pour engendrer un signal d'horloge.

**Revendications**

1. Procédé de synchronisation d'un dispositif électronique (1, 2) sur des instants de passage à une valeur prédéterminée d'un signal (U) alternatif périodique de fréquence prédéterminée, le procédé comprenant les étapes de :

- sur un intervalle de temps antérieur prédéterminé couvrant plusieurs périodes du signal (U) et pour chaque période du signal (U), déterminer au moins un instant de passage, à la valeur prédéterminée, d'une amplitude du signal alternatif à partir de mesures de ladite amplitude,
- sur un intervalle de temps postérieur à l'intervalle de temps antérieur et couvrant au moins une période du signal (U), et pour chaque période du signal (U), déterminer l'instant de passage, à la valeur prédéterminée, de l'amplitude du signal alternatif, **caractérisé en ce que** ledit instant de passage est déterminé à partir d'un instant de passage de référence, d'une durée estimée de la période du signal sur l'intervalle de temps postérieur et d'un nombre de périodes écoulées entre l'instant de passage de référence et l'instant de passage à déterminer, l'instant de passage de référence étant calculé à partir d'une moyenne d'instants de passage déterminés sur l'intervalle de temps antérieur et d'un nombre de périodes moyennes écoulées entre le dernier instant de passage de l'intervalle de temps antérieur et chacun desdits instants de passage comptabilisés dans la moyenne.

2. Procédé selon la revendication 1, dans lequel la durée estimée de la période sur l'intervalle de temps postérieur est égale à une moyenne des durées de périodes sur l'intervalle de temps antérieur.

3. Procédé selon la revendication 1, dans lequel la durée estimée de la période sur l'intervalle de temps postérieur est égale à la durée de la dernière période de l'intervalle de temps antérieur.

4. Procédé selon la revendication 1, dans lequel la fréquence du signal est égale à quelques dizaines de hertz et l'intervalle de temps antérieur vaut quelques secondes.

5. Procédé selon la revendication 4, dans lequel l'instant de passage de référence est obtenu par calcul de la moyenne de la somme de l'instant de passage déterminé de la dernière période de chaque seconde sur l'intervalle de temps antérieur et d'une durée égale au produit de la période moyenne sur l'intervalle de temps antérieur et d'un nombre de périodes séparant l'instant de passage déterminé de la dernière période de ladite seconde et le dernier instant de passage de l'intervalle de temps antérieur.

6. Procédé de transmission de données par courant porteur en ligne entre des dispositifs électroniques (1, 2) reliés à un réseau électrique (100), le procédé de transmission comprenant une phase de synchronisation des dispositifs électroniques (1, 2) mettant en oeuvre le procédé de synchronisation selon l'une quelconque des revendications précédentes à partir d'un signal de tension (U) du réseau électrique (100), et une phase de transmission pendant laquelle des signaux de données sont transmis après une durée prédéterminée suivant un instant de passage de la tension à la valeur prédéterminée.

7. Programme d'ordinateur comprenant des instructions pour mettre en oeuvre, par un dispositif électronique de type adaptateur CPL, le procédé de synchronisation selon l'une quelconque des revendications 1 à 5.

8. Programme d'ordinateur selon la revendication 7, comprenant des instructions pour mettre en oeuvre, par au moins deux dispositifs électroniques de type adaptateur CPL reliés à un réseau électrique, le procédé de transmission de données selon la revendication 6.

9. Moyens de stockage qui contiennent un programme d'ordinateur comportant des instructions pour mettre en oeuvre, par un dispositif électronique de type adaptateur CPL, le procédé de synchronisation selon l'une quelconque des revendications 1 à 5.

10. Moyens de stockage selon la revendication 9 qui contiennent un programme d'ordinateur comportant des instructions pour mettre en oeuvre, par au moins deux dispositifs électroniques de type adaptateur CPL reliés à un réseau électrique, le procédé de transmission de données selon la revendication 6.

11. Dispositif électronique (1, 2) comprenant une unité de commande (3) reliée à un organe d'alimentation (4) et à une interface CPL (5) pour mettre en oeuvre le procédé de synchronisation selon l'une quelconque des revendications 1 à 5.

12. Dispositif électronique selon la revendication 11, dans lequel l'unité de commande (3) est une unité informatique comportant un microprocesseur agencé pour traiter des données.

13. Dispositif électronique selon la revendication 11, dans lequel l'organe d'alimentation (4) est agencé pour transformer un courant d'un réseau électrique en un ou plusieurs courants adaptés à l'alimentation des composants du dispositif électronique.

14. Système de transmission de données comprenant au moins deux dispositifs électroniques (1, 2) selon l'une quelconque des revendications 11 à 13 reliés à un réseau électrique (100) pour mettre en oeuvre le procédé de transmission de données selon la revendication 6.

**Patentansprüche**

1. Verfahren zur Synchronisation einer elektronischen Vorrichtung (1, 2) auf Durchgangszeitpunkte mit einem vorgegebenen Wert eines periodischen Wechselsignals (U) mit vorgegebener Frequenz, wobei das Verfahren die Schritte umfasst:

   - über ein vorgegebenes früheres Zeitintervall, das mehrere Perioden des Signals (U) abdeckt und für jede Periode des Signals (U), Bestimmen mindestens eines Durchgangszeitpunktes, mit dem vorgegebenen Wert, einer Amplitude des Wechselsignals anhand von Messungen der genannten Amplitude,
   - über ein Zeitintervall, das später als das frühere Zeitintervall ist und mindestens eine Periode des Signals (U) abdeckt, und für jede Periode des Signals (U), Bestimmen des Durchgangszeitpunktes, mit dem vorgegebenen Wert, der Amplitude des Wechselsignals, **dadurch gekennzeichnet, dass** der genannte Durchgangszeitpunkt anhand eines Bezugsdurchgangszeitpunktes, einer geschätzten Zeitspanne der Periode des Signals über das spätere Zeitintervall und einer Anzahl von zwischen dem Bezugsdurchgangszeitpunkt und dem zu bestimmenden Durchgangszeitpunkt verstrichenen Perioden bestimmt wird, wobei der Bezugsdurchgangszeitpunkt anhand eines Mittelwertes von Durchgangszeitpunkten berechnet wird, die über ein früheres Zeitintervall bestimmt werden, und einer Anzahl von mittleren Perioden, die zwischen dem letzten Durchgangszeitpunkt des früherer Zeitintervalls und jedem der genannten Durchgangszeitpunkte verstrichen sind, die in dem Mittelwert erfasst sind.

2. Verfahren nach Anspruch 1, bei dem die geschätzte Zeitspanne der Periode über das spätere Zeitintervall gleich einem Mittelwert der Zeitspannen der Perioden über das frühere Zeitintervall ist.

3. Verfahren nach Anspruch 1, bei dem die geschätzte Zeitspanne der Periode über das spätere Zeitintervall gleich der Zeitspanne der letzten Periode des früheren Zeitintervalls ist.

4. Verfahren nach Anspruch 1, bei dem die Frequenz des Signals gleich mehreren zehn Hertz und das frühere Zeitintervall einige Sekunden beträgt.

5. Verfahren nach Anspruch 4, bei dem der Bezugsdurchgangszeitpunkt durch Berechnung des Mittelwertes der Summe aus dem bestimmten Durchgangszeitpunkt der letzten Periode jeder Sekunde über das frühere Zeitintervall und einer Zeitspanne erhalten wird, die gleich dem Produkt der mittleren Periode über das frühere Zeitintervall und einer Anzahl von Perioden ist, die den bestimmten Durchgangszeitpunkt der letzten Periode der genannten Sekunde und den letzten Durchgangszeitpunkt des früheren Zeitintervalls trennt.

6. Verfahren zur Übertragung von Daten mittels einer Powerline-Kommunikation zwischen elektronischen Vorrichtungen (1, 2), die mit einem elektrischen Netzwerk (100) verbunden sind, wobei das Übertragungsverfahren eine Phase der Synchronisation der elektronischen Vorrichtungen (1, 2) umfasst, die das Synchronisationsverfahren nach einem der vorhergehenden Ansprüche anhand eines Spannungssignals (U) des elektrischen Netzwerkes (100) einsetzt, sowie eine Übertragungsphase, während der Datensignale nach einer vorgegebenen Zeitspanne nach einem Durchgangszeitpunkt der Spannung mit dem vorgegebenen Wert übertragen werden.

7. Computerprogramm, das Anweisungen umfasst, um durch eine elektronische Vorrichtung vom Typ PLC-Adapter das Synchronisationsverfahren nach einem der Ansprüche 1 bis 5 auszuführen.

8. Computerprogramm nach Anspruch 7, das Anweisungen umfasst, um durch mindestens zwei elektronische Vorrichtungen vom Typ PLC-Adapter, die mit einem elektrischen Netzwerk verbunden sind, das Datenübertragungsverfahren nach Anspruch 6 auszuführen.

9. Speichermittel, die ein Computerprogramm enthalten, das Anweisungen umfasst, um durch eine elektronische Vorrichtung vom Typ PLC-Adapter das Synchronisationsverfahren nach einem der Ansprüche 1 bis 5 auszuführen.

10. Speichermittel nach Anspruch 9, die ein Computerprogramm enthalten, das Anweisungen umfasst, um durch mindestens zwei elektronische Vorrichtungen vom Typ PLC-Adapter, die mit einem elektrischen Netzwerk verbunden sind, das Datenübertragungsverfahren nach Anspruch 6 auszuführen.

11. Elektronische Vorrichtung (1, 2), umfassend eine Steuereinheit (3), die mit einem Versorgungsorgan (4) und einer PLC-Schnittstelle (5) verbunden ist, um das Synchronisationsverfahren nach einem der Ansprüche 1 bis 5 auszuführen.

**12.** Elektronische Vorrichtung nach Anspruch 11, bei dem die Steuereinheit (3) eine Recheneinheit ist, die einen Mikroprozessor umfasst, der ausgebildet ist, um Daten zu verarbeiten.

**13.** Elektronische Vorrichtung nach Anspruch 11, bei der das Versorgungsorgan (4) ausgebildet ist, um einen Strom eines elektrischen Netzwerkes in einen oder mehrere Ströme umzuwandeln, die zur Versorgung der Komponenten der elektronischen Vorrichtung geeignet sind.

**14.** Datenübertragungssystem, umfassend mindestens zwei elektronische Vorrichtungen (1, 2) nach einem der Ansprüche 11 bis 13, die mit einem elektrischen Netzwerk (100) verbunden sind, um das Datenübertragungsverfahren nach Anspruch 6 auszuführen.

**Claims**

**1.** Method for synchronisation of an electronic device (1, 2) to times of passage to a predetermined value of a periodic alternating signal (U) of predetermined frequency, the method comprising the steps of :

- over a predetermined earlier time interval covering a plurality of periods of the signal (U) and for each period of the signal (U) determining at least one time of passage to the predetermined value of an amplitude of the alternating signal from measurements of said amplitude,
- over a time interval later than the earlier time interval and covering at least one period of the signal (U) and for each period of the signal (U) determining the time of passage to the predetermined value of the amplitude of the alternating signal, **characterised in that** said time of passage is determined from a reference time of passage, from an estimated duration of the period of the signal over the later time interval and from a number of periods elapsed between the reference time of passage and the time of passage to be determined, the reference time of passage being calculated from an average of times of passage determined over the earlier time interval and a number of average periods elapsed between the last time of passage of the earlier time interval and each of said times of passage included in the average.

**2.** Method according to claim 1, in which the estimated duration of the period over the later time interval is equal to an average of the durations of periods over the earlier time interval.

**3.** Method according to claim 1, in which the estimated duration of the period over the later time interval is equal to the duration of the last period of the earlier time interval.

**4.** Method according to claim 1, in which the frequency of the signal is equal to a few tens of hertz and the earlier time interval is a few seconds.

**5.** Method according to claim 4, in which the reference time of passage is obtained by calculating the average of the sum of the determined time of passage of the last period of each second over the earlier time interval and a duration equal to the product of the average period over the earlier time interval and a number of periods separating the determined time of passage of the last period of said second and the last time of passage of the earlier time interval.

**6.** Method of power line carrier data transmission between electronic devices (1, 2) connected to an electrical network (100), the transmission method comprising a phase of synchronisation of the electronic devices (1, 2) using the synchronisation method according to any one of the preceding claims from a voltage signal (U) of the electrical network (100) and a transmission phase during which data signals are transmitted after a predetermined duration following a time of passage of the voltage to the predetermined value.

**7.** Computer program comprising instructions for execution by an electronic device of PLC adapter type of the synchronisation method according to any one of claims 1 to 5.

**8.** Computer program according to claim 7 comprising instructions for execution by at least two electronic devices of PLC adapter type connected to an electrical network of the data transmission method according to claim 6.

**9.** Storage means containing a computer program including instructions for execution by an electronic device of PLC adapter type of the synchronisation method according to any one of claims 1 to 5.

10. Storage means according to claim 9 that contain a computer program including instructions for execution by at least two electronic devices of PLC adapter type connected to an electrical network of the data transmission method according to claim 6

11. Electronic device (1, 2) comprising a control unit (3) connected to a power supply unit (4) and to a PLC interface (5) pour executing the synchronisation method according to any one of claims 1 to 5.

12. Electronic device according to claim 11, in which the control unit (3) is a data processor unit including a microprocessor adapted to process data.

13. Electronic device according to claim 11, in which the power supply unit (4) is adapted to transform a current from an electrical network into a current or a plurality of currents adapted to supply power to the components of the electronic device.

14. Data transmission system comprising at least two electronic devices (1, 2) according to any one of claims 11 to 13 connected to an electrical network (100) for execution of the data transmission method according to claim 6.

Fig. 1

Fig. 2

**EP 3 242 412 B1**

## RÉFÉRENCES CITÉES DANS LA DESCRIPTION

**Documents brevets cités dans la description**

- GB 2156190 A

- WO 2007043705 A